**Europäisches Patentamt**

(19) **European Patent Office**

**Office européen des brevets**

(11) Veröffentlichungsnummer: **0 050 238**
**B1**

# (12) EUROPÄISCHE PATENTSCHRIFT

(45) Veröffentlichungstag der Patentschrift:
**30.11.83**

(51) Int. Cl.³: **F 16 H 7/14** // F02B67/06

(21) Anmeldenummer: **81107718.9**

(22) Anmeldetag: **29.09.81**

(54) Einstellvorrichtung für lageverstellbar verbundene Bauteile, insbesondere Treibriemenspannvorrichtung mit Spannlasche.

(30) Priorität: **17.10.80 DE 3039215**

(43) Veröffentlichungstag der Anmeldung:
**28.04.82 Patentblatt 82/17**

(45) Bekanntmachung des Hinweises auf die Patenterteilung:
**30.11.83 Patentblatt 83/48**

(84) Benannte Vertragsstaaten:
**AT DE FR GB IT NL SE**

(56) Entgegenhaltungen:
**DE - A - 1 911 062**
**DE - C - 553 123**
**US - A - 1 391 185**
**US - A - 3 004 443**
**US - A - 3 430 507**

(73) Patentinhaber: **BAYERISCHE MOTOREN WERKE**
**Aktiengesellschaft, Postfach 40 02 40 Petuelring 130,**
**D-8000 München 40 (DE)**

(72) Erfinder: **Rother, Hubert, Riesenfeldstrasse 104,**
**D-8000 München 40 (DE)**

(74) Vertreter: **Schweiger, Erwin, Bayerische Motoren Werke**
**Aktiengesellschaft Postfach 40 02 40 Petuelring 130 -**
**AJ-20, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Einstellvorrichtung für lageverstellbar verbundene Bauteile, insbesondere Treibriemenspannvorrichtung mit Spannlasche

Die Erfindung bezieht sich auf eine Einstellvorrichtung der Bauart nach dem Oberbegriff des Anspruchs.

Bei einer bekannten Einstellvorrichtung dieser Bauart gemäß DE-A-1 911 062 ist das Ritzel starr, z. B. durch Hartlöten, mit der als Sechskantschraube ausgebildeten Schraube verbunden. Hierdurch ist die Verwendbarkeit der fest verbundenen Einheit Schraube — Ritzel stark eingeschränkt, da für unterschiedliche Anwendungsgebiete unterschiedliche Längen und Kopfformen erforderlich sein können. Hierdurch wird die Vorratshaltung aufwendig und kostspielig. Werden vergütete Schrauben mit dem Ritzel hart verlötet, so führt dies zu einem Festigkeitsverlust der Schraube. Sollen statt der vergüteten unvergütete Schrauben verwendet werden, so müssen diese entsprechend stärker dimensioniert werden. Hierdurch wird zwar der Festigkeitsverlust vermieden, jedoch das Gewicht der Schraube erhöht.

Der Erfindung liegt die Aufgabe zugrunde, eine Einstellvorrichtung nach dem Oberbegriff des Anspruchs so auszubilden, daß verschiedene Arten und Längen von Norm-Schrauben sowie Norm-Gewindemuttern oder eine Gewindebohrung in einem der Bauteile wahlweise mit einem auf den Schaft der Schraube lose aufgesteckten Ritzel kombiniert werden können.

Diese Aufgabe löst die Erfindung durch die kennzeichnenden Merkmale des Anspruchs.

Durch die erfindungsgemäße Ausbildung des Ritzels ist es möglich, dieses nicht nur in Verbindung mit Schrauben unterschiedlicher Länge zu verwenden, sondern es können auch Schrauben mit oder ohne Außenprofil am Schaft verwendet werden. Im ersteren Fall kann die Schraube über das Ritzel beim Klemmvorgang festgehalten bzw. beim Verstellvorgang gedreht werden und die Klemmkraft wird durch eine Mutter am freien Schaftende der Schraube erzeugt. Im zweiten Fall ist das Ritzel auf einem glatten oder mit Gewinde versehenen Schaft der Schraube frei drehbar und die Schraube wirkt mit einer Gewindebohrung des zweiten Bauteiles zusammen. Auf diese Weise ergeben sich vielfältige Verwendungsmöglichkeiten für die erfindungsgemäße Einstellvorrichtung bzw. das stets gleich ausgeführte Ritzel.

Durch die DE-C-553 123 ist bei einer Schraubensicherung zwar ein Sperrmuffe bekannt, die auf den ersten Blick eine gewisse Ähnlichkeit mit dem erfindungsgemäßen Ritzel mit Bund aufweist, jedoch sind die Zähne der Sperrmuffe zur legschlüsselartigen Sicherung einer Mutter vorgesehen und ein Schlüsseleingriffsprofil am Bund ist lediglich bei Herstellung der Sperrmuffe mittels eines Schraubenschlüssels bestimmt. Eine Anregung zur erfindungsgemäßen Ausbildung eines Ritzels für das gegenseitige Verstellen zweier Bauteile, bei dem die Zähne des Ritzels in eine Verzahnung an einem Bauteil eingreifen und das Ritzel mittels eines Schraubenschlüssels drehbar ist, der am Schlüsseleingriffsprofil ansetzbar ist, ist aus dieser Patentschrift nicht herleitbar.

Im folgenden wird die Erfindung anhand von zwei in der Zeichnung dargestellten Ausführungsbeispielen erläutert. Es zeigt

Fig. 1 eine Einstellvorrichtung für den Keilriemenantrieb eines Generators an einer Brennkraftmaschine,

Fig. 2 einen Schnitt der Einstellvorrichtung entlang der Linie II-II nach Fig. 1,

Fig. 3 ein in der Einstellvorrichtung nach Fig. 1 verwendetes Ritzel,

Fig. 4 ein anderes Ausführungsbeispiel der Einstellvorrichtung nach Fig. 1 und

Fig. 5 einen Schnitt entlang der Linie V-V der Einstellvorrichtung nach Fig. 4.

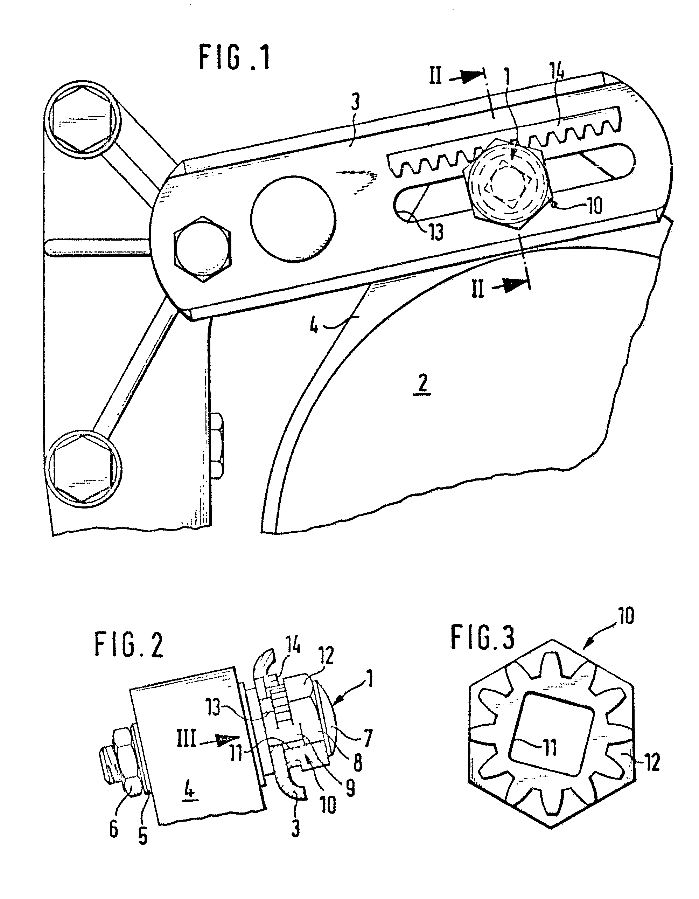

In den Fig. 1 und 2 ist eine Einstellvorrichtung mit einer Norm-Schloßschraube als Schraube 1 zum Festklemmen der miteinander verbundenen Bauteile dargestellt, die im vorliegenden Anwendungsfall zum Einstellen eines nicht dargestellten Keilriementriebes für einen Generator 2 verwendet ist. Die miteinander verbundenen Bauteile bestehen dabei aus einer Spannlasche 3 und einem an das Gehäuse des Generators 2 angeformten Ansatz 4, durch den sich die Schraube 1 erstreckt. An der Rückseite des Ansatzes 4 sind auf die Schraube 1 eine Beilagscheibe 5 aufgeschoben und eine Sechskantmutter 6 aufgeschraubt. Die Schraube 1 ist als Norm-Schloßschraube mit einem Flachrundkopf 7 und einem Vierkant 8 als Außenprofil im Übergangsbereich zwischen Flachrundkopf 7 und Schaft 9 ausgebildet. Auf den Vierkant 8 ist ein Ritzel 10 mit einem Innenprofil in Form einer Vierkantöffnung 11 lose aufgeschoben, so daß es zwischen dem Flachrundkopf 7 und der Spannlasche 3 festgeklemmt ist. Das Ritzel 10 (Fig. 3) weist einen als Sechskant ausgebildeten Bund 12 auf, über den das Ritzel 10 zusammen mit der Schraube 1 mittels eines entsprechenden Schraubenschlüssels gedreht werden kann. Die Spannlasche 3 weist ein Langloch 13 auf, durch das die Schraube 1 hindurchragt. Parallel zu diesem Langloch 13 ist der Spannlasche 3 durch Pressen eine Verzahnung 14 in Form einer Zahnstange angeformt, mit der das Ritzel 10 in Eingriff steht.

Ein Verdrehen des Ritzels 10 und damit ein Verschieben der Schraube 1 innerhalb des Langloches 13 der Spannlasche 3 bewirkt eine Lageänderung des Ansatzes 4 in Bezug auf die Spannlasche 3. Nach einer erfolgten Einstellung wird die Sechskantmutter 6 festgezogen. Der Generator 2 ist an einem nicht dargestellten weiteren Ansatz angelenkt und wird über einen ebenfalls nicht dargestellten Keilriementrieb angetrieben. Durch Einstellen der Lage des Ansatzes 4 in Bezug auf die Spannlasche 3 kann die Spannung des Keilriemens eingestellt werden.

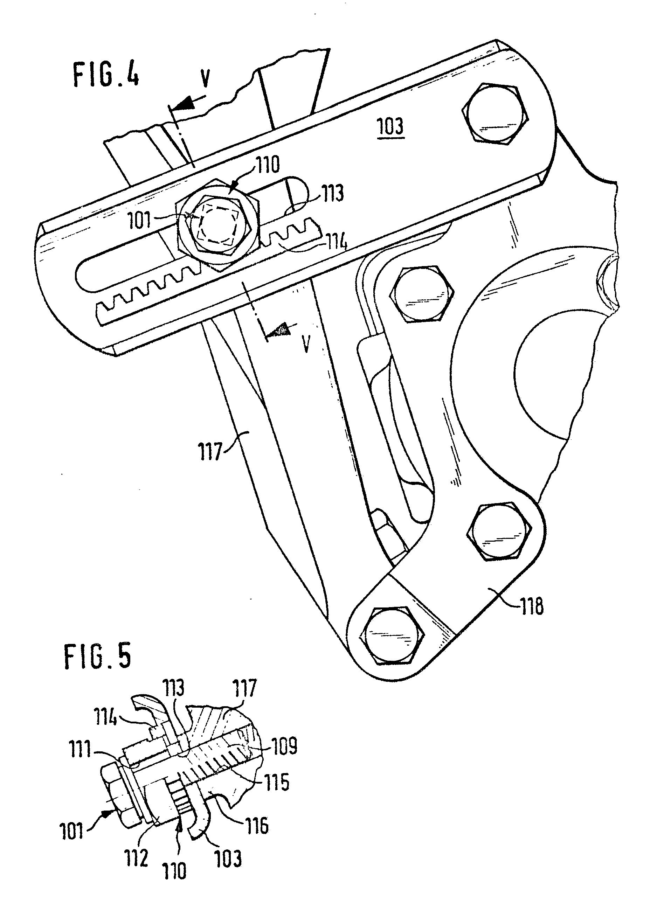

Im Ausführungsbeispiel nach den Fig. 4 und 5 ist eine Einstellvorrichtung dargestellt, bei der als Schraube 101 eine Norm-Sechskantschraube verwendet ist, die die Vierkantöffnung 111 des Ritzels 110 mit ihrem Schaft 109 durchdringt. Die Schraube 101 ist in einen mit einer Gewindebohrung 115 versehenen Ansatz 116 eines Trägers 117 geschraubt, an den ein mit der Spannlasche 103 gelenkig verbundenes Halteblech 118 für ein bezüglich seiner Lage einzustellendes Aggregat entfernt von der Schraube 101 angelenkt ist. Die Spannlasche 103 und das Ritzel 110 haben die gleiche Ausbildung wie beim ersten Ausführungsbeispiel nach den Fig. 1 bis 3. Zwischen der Schraube 101 und dem Ritzel 110 besteht hierbei jedoch keine Mitnahmeverbindung in Drehrichtung, da der Gewindeschaft 109 in der Vierkantöffnung 111 verdrehbar ist. Nach dem Lösen der Schraube 101 kann das Ritzel 110 mittels eines Schraubenschlüssels gedreht und die Spannlasche 103 bzw. das daran angelenkte Halteblech 118 in eine gewünschte Einstellage gebracht werden. Danach wird das Ritzel 110 mittels des Schraubenschlüssels lediglich festgehalten, während die Schraube 101 mit einem anderen Schraubenschlüssel angezogen wird.

Durch die beschriebene Ausbildung ist es möglich, das Ritzel 10 bzw. 110 in Verbindung mit unterschiedlichen genormten Schrauben zu verwenden, die nicht nur verschiedene Längen, sondern auch verschiedene Ausbildungen bezüglich ihres Kopfes bzw. ihres Übergangsbereiches zwischen Kopf und Schaft aufweisen. So kann einerseits, wie im ersten Ausführungsbeispiel dargestellt, eine Norm-Schloßschraube in Verbindung mit einer Norm-Sechskantmutter verwendet werden oder, wie im zweiten Ausführungsbeispiel dargestellt, eine Norm-Sechskantschraube, die in eine Gewindebohrung eingreift.

## Patentanspruch

Einstellvorrichtung für lageverstellbar verbundene Bauteile, insbesondere Treibriemenspannvorrichtung mit Spannlasche,

— wobei das eine, gegenüber dem anderen zu verstellende Bauteil mit einem Langloch (13, 113) und einer parallel zu diesem angeordneten Verzahnung (14, 114) versehen ist,
— in die ein Ritzel (10, 110) eingreift und mittels einer Schraubverbindung zwischen einem Schraubenkopf und den beiden Bauteilen derart festgeklemmt ist,
— daß bei lockerer Schraubverbindung durch Drehen des Ritzels (10, 110) über einen drehfest mit ihm verbundenen Bund (12, 112) mit Schlüssel-Eingriffsprofil ein gegenseitiges Verschieben der Bauteile bewirkbar ist, dadurch gekennzeichnet,

— daß das Ritzel (10; 110) mit Bund (12; 112) am kopfseitigen Ende des Schaftes (9; 109) einer Schraube (1; 101) lose steckbar angeordnet ist
— und daß das Ritzel (10; 110) mit einem Innenprofil (Vierkantöffnung 11; 111) versehen ist,
— das entweder vom Schaft (109) einer in einer Gewindebohrung (115) eines Bauteiles (Ansatz 116) festgelegten Schraube (101) mit Drehspiel durchdrungen ist oder
— in ein Außenprofil (Vierkant 8) am Schaft (9) einer durch eine Mutter (Sechskantmutter 6) festgelegten Schraube (1) drehfest eingreift.

## Claim

A device for setting displaceably connected components, in particular a driving belt tensioning device with a tensioning plate,

— wherein one of the components, to be displaced relatively to the other, is provided with a slot (13, 113) and a serration (14, 114) which is arranged parallel to the slot and
— in which engages a pinion (10, 110) which, by means of a screw connection, is clamped between a screw-head and the two components in such manner
— that, when the screw connection is loose, displacement of the components relatively to each other can be achieved by rotating the pinion (10, 110) by way of a collar (12, 112) which is connected to and rotates with the pinion and has a profile for the engagement of a spanner, characterized in

— that the pinion (10; 110) together with the collar (12, 112) can be loosely fitted on the top end of the shank (9; 109) of a screw (1; 101),
— that the pinion (10; 110) has an inner profile (square opening 11; 111).
— which is either traversed with rotary clearance by the shank (109) of a screw (101) secured in a threaded bore (115) in one of the components (attachment 116), or
— non-rotatably engages in an outer profile (square 8) provided on the shank (9) of a screw (1) secured by a nut (hexagonal nut 6).

## Revendication

Dispositif de réglage pour éléments de construction, assemblés avec position réglable, notamment dispositif de tension de courroie de transmission avec patte de tension,

— l'un des éléments de construction à déplacer par rapport à l'autre étant muni d'un trou oblong et d'une denture disposée parallèlement à celui-ci,

— dans laquelle engrène un pignon et pouvant, au moyen d'un assemblage fileté entre une tête de vis et les deux éléments de construction, être bloqué de manière

— que lorsque l'assemblage fileté est desserré, on puisse provoquer un déplacement relatif des éléments de construction par rotation du pignon par l'intermédiaire d'un collet assemblé avec lui et présentant un profil d'engagement de clé, caractérisé en ce:

— que le pignon (10, 110) avec collet (12, 112) peut être placé par enfoncement libre à l'extrémité côté tête du fût (9, 109) d'une vis (1, 101),

— que le pignon (10, 110) est muni d'un profil intérieur (évidement à quatre pans 11, 111),

— qui est: soit traversé avec un jeu de rotation par le fût (109) d'une vis (101) fixée dans un perçage taraudé (115) d'un élément de construction (saillie 116), soit en engrènement solidairement en rotation avec un profil extérieur (quatre pans 8) du fût (9) d'une vis (1) fixée par un écrou (écrou à six pans 6).

# FIG.1

# FIG.2

# FIG.3

FIG.4

V

110

113

101

114

103

117

V

118

FIG.5

113  117

114

111

109

115

116

101

112  110  103